# EUROPÄISCHE PATENTSCHRIFT

(11) **EP 2 943 376 B1**
(45) Veröffentlichungstag und Bekanntmachung des Hinweises auf die Patenterteilung: **19.04.2017**
(21) Anmeldenummer: 13821449.9
(22) Anmeldetag: 20.12.2013
(51) Int. Cl.: B60R 9/058

(54) **DACHGRUNDTRÄGER FÜR EIN KRAFTFAHRZEUG**
ROOF BARS FOR A MOTOR VEHICLE
BARRES DE TOIT POUR VÉHICULE AUTOMOBILE

(30) Priorität: 14.01.2013 DE 102013000460
(43) Veröffentlichungstag der Anmeldung: 18.11.2015
(73) Patentinhaber: Audi AG, 85045 Ingolstadt (DE)
(72) Erfinder: SCHIERK, Sebastian, 86565 Gachenbach (DE); SCHÄFER, Michael, 85139 Wettstetten (DE); BÜRGER, Christian, 85137 Walting (DE); STREIBEL, Simon, 85049 Ingolstadt (DE)
(86) Internationale Anmeldenummer: PCT/EP2013/003882
(87) Internationale Veröffentlichungsnummer: WO 2014/108161

(56) Entgegenhaltungen:
- DE-A1- 3 432 067
- DE-T2- 60 102 620
- US-A- 2 940 652

## Beschreibung

Die Erfindung betrifft einen Dachgrundträger für ein Kraftfahrzeug gemäß dem Oberbegriff des Patentanspruchs 1.

Gattungsgemäße Dachgrundträger für Kraftfahrzeuge sind in zahlreichen Variationen bekannt. Sie dienen zum Transport von Lasten auf dem Fahrzeugdach und sind als sogenannte Klemmträger ausgeführt. Auf dem Fahrzeugdach sind üblicherweise zwei, ein der Fahrzeugfront und ein dem Fahrzeugheck zugewandter Klemmträger vorgesehen, welche auch als Trägerbrücke bezeichnet werden. Befestigt werden die Dachgrundträger durch spezielle Klemmträgerfüße bzw. Spannkrallen, welche sich am Seitenwandrahmen des Kraftfahrzeugs verspannen können. Als Verspannungsmechanismus sind hierbei verschiedenste Konstruktionen im Einsatz. Bekannte Mechanismen, welche über Hebel oder Exzenter gespannt werden, bringen den Nachteil mit sich, dass sie bei starren Hebeln keinen Toleranzausgleich bieten und ein zusätzliches Bauteil für das Herstellen der Klemmspannung benötigt wird.

Aus der DE 33 40 137 A1 ist ein festspannbarer Gepäckträger bekannt, welcher eine Tragstruktur für einen Dachträger in Form eines Stützfußes aufweist und über einen Spannbügel an einer Regenrinne eines Fahrzeugdachs befestigt ist. Der Spannbügel ist gelenkig über einen Schwenkbolzen mit einem Schwenkarm verbunden, welcher an dem Stützfuß über einen Lagerbolzen angelenkt ist. Zusätzlich ist ein zweiarmiger Hebel vorgesehen, um den Schwenkarm nach Art einer Drucktaste entfernen und fixieren zu können. Ein Ausgleich von Toleranzen des Seitenwandholms erfolgt nicht.

Aus der CH 318683 ist ein Skiträger bekannt, welcher zur Befestigung am Autodach an einer Wasserrinne über einen Spannhebelverschluss verfügt, welcher zum Spannen einen Federbügel aus Draht aufweist.

Aus der US 2,940,652 A1 ist ein gattungsgemäßer Dachgrundträger für ein Kraftfahrzeug bekannt, welcher eine Tragstruktur für ein Dachträgerelement mit einer Befestigungskralle umfasst, welche an einem ersten Ende an einen Seitenwandholm einer Fahrzeugkarosserie angreift und mit einem Spannhebel gelenkig verbunden ist. Die Befestigungskralle ist im Bereich ihres zweiten Endes in einer Führung in der Tragstruktur geführt. Zudem ist eine Blattfeder vorgesehen ist, welche einerseits an dem Spannhebel im Bereich seines freien Endes angreift und sich andererseits an der Tragstruktur abstützt, wobei es beim Herunterdrücken des Spannhebels zur Befestigungskralle hin durch die Federkraft zu einem Verklemmen der Befestigungskralle an dem Seitenwandholm kommt.

Die Aufgabe der Erfindung ist es, einen Dachgrundträger für ein Kraftfahrzeug zu schaffen, welcher einfach aufgebaut und leicht von Hand bedienbar ist, wobei eine gute Befestigung am Seitenwandholm des Kraftfahrzeugs sichergestellt wird.

Erfindungsgemäß wird die Aufgabe durch Bereitstellung eines Dachgrundträgers für ein Kraftfahrzeug mit den Merkmalen des Patentanspruchs 1 gelöst. Vorteilhafte Ausführungsformen und Weiterbildungen der Erfindung sind in den abhängigen Ansprüchen angegeben.

Ausführungsformen des erfindungsgemäßen Dachträgers ermöglichen durch einen neuen Klemm- bzw. Verspannrnechanismus in vorteilhafter Weise einen Toleranzausgleich der Seitenwandholmgeometrie, so dass über einen kompletten Toleranzbereich die Klemmspannung annähernd konstant gehalten werden kann.

Ausführungsformen der vorliegenden Erfindung stellen eine Dachgrundträger für ein Kraftfahrzeug zur Verfügung welcher eine Tragstruktur für ein Dachträgerelement mit einer Befestigungskralle aufweist, welche an einem ersten Ende an einen Seitenwandholm einer Fahrzeugkarosserie angreift und mit einem Spannhebel gelenkig verbunden ist. Hierbei ist die Befestigungskralle im Bereich ihres zweiten Endes in einer Führung in der Tragstruktur geführt und es ist eine Blattfeder vorgesehen, welche einerseits an dem Spannhebel im Bereich seines freien Endes angreift und sich andererseits an der Tragstruktur abstützt, wobei es beim Herunterdrücken des Spannhebels zur Befestigungskralle hin durch die Federkraft zu einem Verklemmen der Befestigungskralle an dem Seitenwandholm kommt.

Erfindungsgemäß ergibt sich eine gute Kraftübertragung vom Dachträgerelement auf das Fahrzeugdach, wenn die Tragstruktur zwei Profilelemente in U-Form aufweist, welche miteinander verbunden sind. Vorteilhaft ist es dabei, die Tragstruktur mit einem am Fahrzeugdach anliegenden Fußelement auszustatten.

Durch die bewegliche Anordnung der Befestigungskralle in ihrer Führung der Tragstruktur wird in Verbindung mit der Blattfeder ein Ausgleichsbauteil geschaffen, welches es ermöglicht, Toleranzen der Seitenwandholmgeometrie auszugleichen, so dass über einen kompletten Toleranzbereich die Klemmspannung annähernd konstant gehalten werden kann. Überdies können die Bedienkräfte zum Herunterdrücken des Spannhebels soweit reduziert werden, dass eine Einhandbedienung ohne weiteres möglich wird.

In vorteilhafter Ausgestaltung des Dachgrundträgers sind zur gelenkigen Verbindung von Befestigungskralle und Spannhebel Lagerlaschen am Spannhebel und Lagerlaschen an der Befestigungskralle vorgesehen, welche eine Welle aufnehmen, die an der Tragstruktur in der Führung verschiebbar aufgenommen ist. Damit kann in einfacher Art und Weise eine Verbindung beider Bauteile und Anbindung an die Tragstruktur erfolgen.

In weiterer vorteilhafter Ausgestaltung des Dachgrundträgers ist die Befestigungskralle an ihrem zweiten Ende zusätzlich in einer zweiten Führung in der Tragstruktur geführt. Dies ermöglicht eine zusätzliche Anbindung der Befestigungskralle an die Tragstruktur, was zu einem besonders sicheren und dauerhaften Verklemmen führt.

In weiterer vorteilhafter Ausgestaltung des Dachgrundträgers sind die beiden Führungen in einfacher Art und Weise in Form von Längsschlitzen in gegenüberliegenden Schenkeln der Tragstruktur ausgebildet.

In weiterer vorteilhafter Ausgestaltung des Dachgrundträgers ergibt sich eine besonders einfache Lagerung, wenn das zweite Ende der Befestigungskralle Zapfen aufweist, welche in den Längsschlitzen der zweiten Führung aufgenommen sind.

In weiterer vorteilhafter Ausgestaltung des Dachgrundträgers ergibt eine zuverlässige und einfache Anbindung der Blattfeder an den Spannhebel durch eine Spannhebelwelle, die in Lagerlaschen am Spannhebel aufgenommen ist.

In weiterer vorteilhafter Ausgestaltung des Dachgrundträgers ergibt eine zuverlässige und einfache Anbindung der Blattfeder an der Tragstruktur durch eine Federwelle zwischen den Schenkel der Tragstruktur.

In weiterer vorteilhafter Ausgestaltung des Dachgrundträgers weist die Befestigungskralle eine Öffnung zur Aufnahme der Welle des Spannhebels in seinem heruntergedrückten Zustand auf. Damit kann in einfacher Art und Weise ohne zusätzliche Bauteile ein dauerhaftes, zuverlässiges Schließen des Dachgrundträgers gewährleistet werden,

Vorteilhafte Ausführungsformen der Erfindung sind in der Zeichnung dargestellt und werden nachfolgend beschrieben.

Dabei zeigen:
- Fig. 1: eine schematische Perspektivdarstellung eines Ausführungsbeispiels eines erfindungsgemäßen Dachgrundträgers für ein Kraftfahrzeug in einem geschlossenen Zustand, welcher auf einem Fahrzeugdach befestigt ist,
- Fig. 2: eine perspektivische Darstellung des Dachgrundträgers aus Fig. 1 ohne Fahrzeugdach in einem halbgeschlossenen Zustand,
- Fig. 3: eine perspektivische Darstellung des Dachgrundträgers aus Fig. 1 ohne Fahrzeugdach in einem geöffneten Zustand,
- Fig. 4: eine perspektivische Darstellung des Dachgrundträgers aus Fig. 1 ohne Fahrzeugdach in einem geschlossenen Zustand.

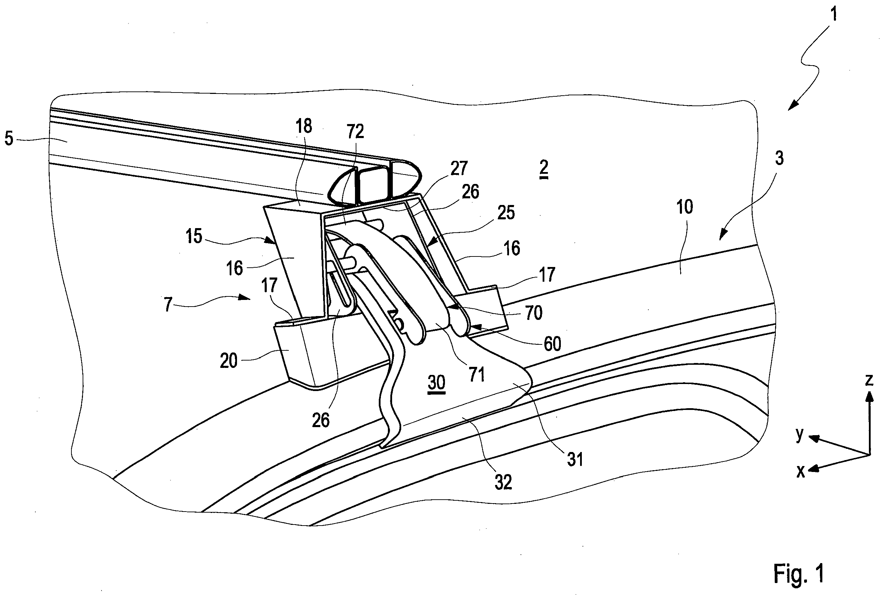

Die Fig. 1 zeigt einen Dachgrundträger 1 für ein Kraftfahrzeug in geschlossenem Zustand, welcher auf einem Fahrzeugdach 2 montiert ist und in bekannter Weise zur Aufnahme von Lasten bzw. Gepäck, wie Skier oder dergleichen vorgesehen ist. Üblicherweise werden hierzu zwei, einer Fahrzeugfront und einem Fahrzeugheck zugewandte Dachgrundträger 1 am Fahrzeugdach 2 befestigt.

Ein jeder Dachgrundträger 1 weist ein sich in Fahrzeugquerrichtung y über das Fahrzeugdach 2 erstreckendes, in Fig. 1 bis 4 nur teilweise dargestelltes Dachträgerelement 5 auf, welche im dargestellten Ausführungsbeispiel als Hohlprofil ausgebildet ist. Das Dachträgerelement 5 ist über zwei gegenüberlegende Tragstrukturen 7 am Fahrzeugdach 2 an einem Seitenwandholm 10 bzw. an einem Seitenwandrahmen einer Fahrzeugkarosserie 3 angebracht. Die Tragstrukturen 7 weisen hierzu jeweils ein erstes äußeres U-Profilelement 15 auf, welches zwei Schenkel 16 mit je einem Stützfuß 17 und ein Verbindungselement 18 aufweist. Die U-Form des ersten Profilelements 15 wird von den zwei Schenkeln 16 und dem beide Schenkel 16 verbindenden, parallel zum Fahrzeugdach 2 verlaufenden ersten Verbindungselement 18 gebildet. Das äußere Profilelement 15 stützt sich mit je einem Stützfuß 17 auf ein quaderförmiges Fußelement 20 ab, welches auf dem Fahrzeugdach 2 aufliegt. Innerhalb des ersten Profilelements 15 ist ein zweites Profilelement 25 vorgesehen, welches ebenfalls eine U-Form aufweist. Die U-Form des zweiten Profilelements 25 wird von zwei Schenkeln 26 und einem beide Schenkel 26 verbindenden, parallel zum Fahrzeugdach 2 verlaufenden zweiten Verbindungselement 27 gebildet. Die beiden Schenkel 26 stehen von dem Fußelement 20 ab. Eine Verbindung beider Profilelement 15, 25 kann über die beiden aufeinanderliegenden Verbindungselemente 18, 27 erfolgen. Vorzugsweise sind das erste Profilelement 15 und das zweite Profilelement 25 aus Blech hergestellt. Das Dachträgerelement 5 stützt sich auf das erste Verbindungselement 17 des ersten Profilelements 15 ab und überträgt so das am Dachträgerelement aufgenommene Gewicht über die Stützfüße 17 und über das Fußelement 20 auf das Fahrzeugdach 2. Die Tragstruktur 7 wird im dargestellten Ausführungsbeispiel vom ersten Profilelement 15, dem zweiten Profilelement 25 und dem Fußelement 20 gebildet.

Mit der Tragstruktur 7 bzw. dem zweiten Profilelement 25 ist eine Befestigungskralle 30 gelenkig verbunden. Die Befestigungskralle 30 greift mit ihrem ersten Ende 31 an dem Seitenwandholm 10 bzw. am Seitenwandrahmen an, wofür eine Abwinkelung 32 an der Befestigungskralle 30 ausgebildet ist. Die Abwinkelung 32 greift, wie in Fig. 1 dargestellt ist, direkt am Seitenwandholm 10 bzw. am Seitenwandrahmen krallenartig ein. Möglich ist aber auch, die Abwinkelung 32 an einer vorgesehenen Regenrinne am Seitenwandholm 10 angreifen zu lassen.

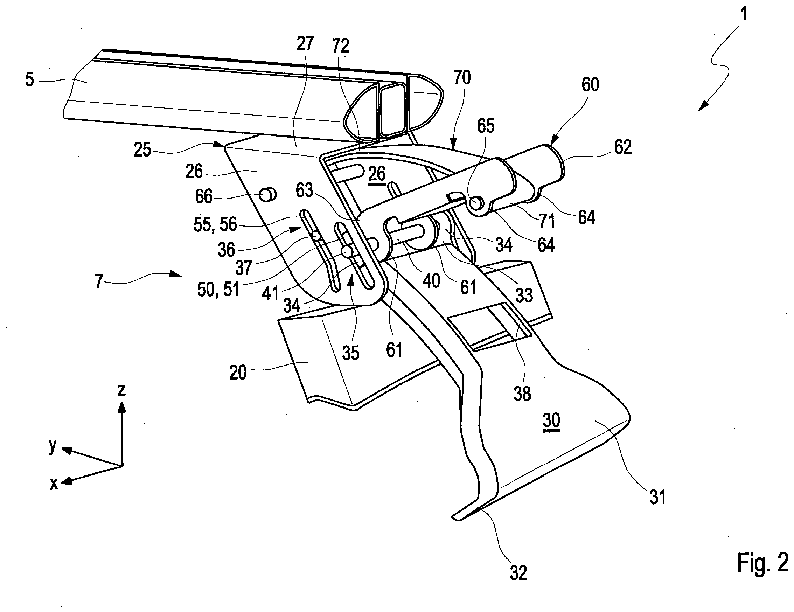

In Fig. 2 bis 4 ist der Dachgrundträger 1 zur besseren Darstellung ohne erstes Profilelement 15 dargestellt.

Im Unterschied zur Fig. 1 zeigt Fig. 2 den Dachgrundträger 1 in einem halbgeschlossenen Zustand. Wie aus Fig. 2 weiter ersichtlich ist, sind im Bereich eines zweiten Endes 33 der Befestigungskralle 30 zur Ausbildung eines ersten Lagerabschnitts 35 mit dem zweiten Profilelement 25 seitlich zwei Lageraugen bzw. Lagerlaschen 34 ausgebildet, welche beispielsweise mit Spiel innenseitig an den Schenkeln 26 des zweiten Profilelements 25 anliegen und gemeinsam eine Welle 40 drehbar aufnehmen. Die Welle 40 ist mit ihren Wellenenden 41 in ersten Führungen 50 aufgenommen, welche in den Schenkeln 26 des zweiten Profilelements 25 vorgesehen sind. Dadurch ist die Welle 40 beiderseitig verschieblich von dem Profilelement 25 aufgenommen. Die ersten Führungen 50 sind vorzugsweise als Längsschlitze 51 ausgebildet und bilden Führungsbahnen für die Befestigungskralle 30 und verlaufen schräg geneigt zur Fahrzeughochrichtung z zum Fahrzeuginneren hin und sind in einem vorderen, fahrzeugäußeren Bereich der Schenkel 26 vorgesehen. Zudem ist das zweite Ende 33 der Befestigungskralle 30 seitlich mit zwei Zapfen 37 versehen, welche in eine zweite Führung 55 der Tragstruktur 7 bzw. in die Schenkel 26 des zweiten Profilelements 25 eingreifen. Das zweite Ende 33 der Befestigungskralle 30 ist in den zweiten Führungen 55 beiderseitig verschieblich aufgenommen. Die zweiten Führungen 55 sind hierzu vorzugsweise als Längsschlitze 56 ausgebildet und bilden Führungsbahnen für die Zapfen 37. Die Längsschlitze 56 verlaufen schräg geneigt zur Fahrzeughochrichtung z zum Fahrzeuginneren hin und sind im Vergleich zu den ersten Führungen 50 in einem hinteren, einem Fahrzeuginneren näher liegenden Bereich der Schenkel 26 des zweiten Profilelements 25 vorgesehen. Der zweite Längsschlitz 56 hat eine größere längliche Erstreckung als der erste Längsschlitz 51 und kann zum Beispiel eine Abwinkelung oder leichten Knick aufweisen und eine geringe Breite aufweisen bzw. schmaler gestaltet sein. Das zweite Ende 33 der Befestigungskralle 30 bildet somit mit der zweiten Führung 55 einen zweiten Lagerabschnitt 37 für die Befestigungskralle 30 an der Tragstruktur 5.

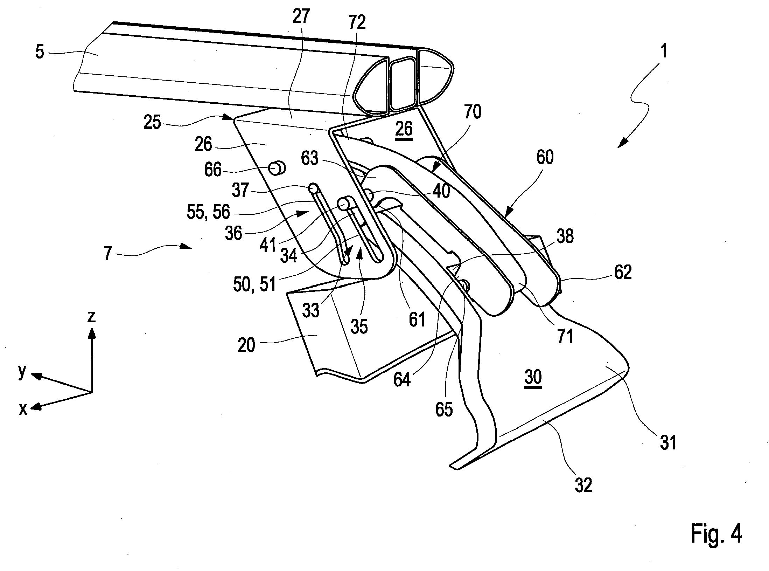

Mit der Welle 40 ebenfalls verbunden ist ein Spannhebel 60, welcher hierzu an seinem innerhalb der Schenkel 26 befindlichen, zweiten Ende 63 zwei Spannhebellageraugen bzw. zwei erste Spannhebellagerlaschen 61 aufweist. Der Spannhebel 60 ist über die Welle 40 schwenkbar mit der Befestigungskralle 30 verbunden. Die ersten Spannhebellagerlaschen 61 verlaufen dabei innenseitig mit geringem Abstand zu den Lagerlaschen 34 der Befestigungskralle 30. An freien ersten Ende 62 des Spannhebels 60 sind zwei, zweite Spannhebellagerlaschen 64 vorgesehen, welche eine Spannhebelwelle 65 lagern. Die Spannhebelwelle 65 dient zur Aufnahme eines ersten Blattfederendes 71 eines Federelements in Form einer Blattfeder 70. Die Aufnahme des ersten Blattfederendes 71 kann durch eine entsprechend abgebogene Gestaltung des Blattfederendes 71 erfolgen, welches beispielweise in einen in der Spannhebelwelle 65 eingebrachten Schlitz eingebracht sein kann. Die Blattfeder 70 stützt sich mit ihrem anderen zweiten Blattfederende 72 an der Tragstruktur 7 bzw. an den Schenkeln 26 des zweiten Profilelements 25 ab, wofür eine Federwelle 66 zwischen den Schenkeln 26 vorgesehen ist. Die Federwelle 66 dient zur Aufnahme des zweiten Blattfederendes 72 der Blattfeder 70. Die Aufnahme kann analog zum ersten Blattfederende 71 durch eine entsprechend abgebogene Gestaltung des zweiten Blattfederendes 72 erfolgen, welche beispielsweise in einen Schlitz in der Federwelle 66 eingebracht sein kann. Etwa mittig weist die Befestigungskralle 30 eine rechteckförmige Öffnung 38 auf. Die Öffnung 38 dient zur Aufnahme des ersten Blattfederendes 71 mit der Spannhebelwelle 65, welche im geschlossen Zustand des Dachgrundträgers 1 mit den ersten Spannhebellagerlaschen 61 in die Öffnung 38 eintaucht, wie aus Fig. 1 und 4 ersichtlich ist.

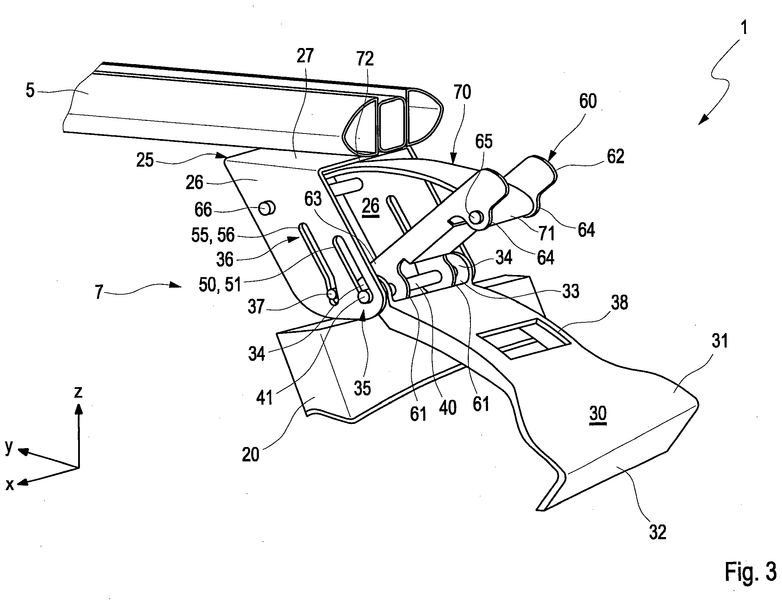

Fig. 3 zeigt im Unterschied zu Fig. 1 und 2 einen gehöffneten Zustand des Dachgrundträgers 1, bei welchem der Spannhebel 60 maximal geöffnet ist und die Blattfeder 70 entspannt ist. In dieser Stellung befinden sich die gemeinsame Welle 40 von Befestigungskralle 30 und Spannhebel 60 an den unteren, dem Fahrzeugdach 2 näheren Enden innerhalb der ersten Führung 50. In gleicher Weise sind die beiden Zapfen 37 am zweiten Ende 33 der Befestigungskralle 30 in der zweiten Führung 55 bzw. den zweiten Längsschlitzen 56 in einer unteren Position nahe dem Fahrzeugdach 2 positioniert.

Fig. 4 zeigt einen geschlossenen Zustand des Dachgrundträgers 1, bei welchem der Spannhebel 60 geschlossen ist und mit der ersten Spannhebelwelle 65 und den zweiten Spannhebellagerlaschen 64 in die Öffnung 38 der Befestigungskralle 30 eintaucht, mit den zweiten Spannhebellagerlaschen 64 einschnappt und dort quasi hinterrastet. Dabei befindet sich die Hebelmechanik im dargestellten geschlossenen Zustand in einer Übertotposition. Das bedeutet, dass ein Punkt der maximalen Spannkraft der Blattfeder 70 während der Schließbewegung überwunden wurde und die Blattfeder 70 in der geschlossenen Stellung mit einer vorgebbaren Spannkraft bzw. Klemmspannung auf die Befestigungskralle 30 wirkt. Die gemeinsame Welle 40 von Befestigungskralle 30 und Spannhebel 60 sind dabei in einem oberen, dem Dachträgerelement 5 näheren Bereich in der ersten Führung 50 angekommen. In gleicher Weise sind die beiden Zapfen 37 am zweiten Ende 33 der Befestigungskralle 30 in der zweiten Führung 55 bzw. zwei Längsschlitzen 56 in einer oberen, dem Dachträgerelement 5 näheren Position angekommen.

Die Blattfeder 70 bildet erfindungsgemäß einen weiteren Spannhebel für die Befestigungskralle 30 und kann die Spannkraft quasi als Kniehebel aufbringen, welche zur Befestigung des Dachgrundträgers 1 am Seitenwandholm 10 erforderlich ist. Zugleich können Toleranzen des Seitenwandholms 10 selbstständig ausgeglichen werden, so dass ein gleichbleibendes Spannkraftniveau aufrechterhalten werden kann. In den Verspannungsmechanismus wird als Bauteil somit die Blattfeder 70 eingebracht, welche über den kompletten Toleranzbereich die Klemmspannung annähernd konstant halten kann. Durch eine geschickte Geometrieanordnung von Spannhebel 60 und Blattfeder 70 und durch die drehbewegliche und in Fahrzeughochachse 7 bewegliche Anordnung der Befestigungskralle 30 in ihren beiden Führungen 50, 55 der Tragstruktur 7 wird ein Ausgleichsbauteil geschaffen, welches es ermöglicht, die Bedienkräfte zum Herunterdrücken des Spannhebels 60 soweit zu reduzieren, dass eine Einhandbedienung ohne weiteres möglich wird. Der erfindungsgemäße Klemmträgermechanismus wird mittels zweier Hebel, einerseits dem Spannhebel 60 und andererseits der Blattfeder 70 erreicht, wobei ein Verschieben in den Führungsbahnen 50, 55 möglich ist, so dass eine Verspannung der Befestigungskralle 30 am Seitenwandholm 10 erfolgt. Da der zweite Hebel die Blattfeder 70 darstellt, wird so ein Töleranzausgleich des Seitenwandholms 10 erreicht.

Zur Befestigung am Fahrzeugdach 2 muss der Mechanismus aus der geöffneten Position nach Fig. 3 in die geschlossene Position nach Fig. 4 gebracht werden. Hierzu wird der starre Spannhebel 60 nach unten gedrückt bis die Befestigungskralle 30 am Seitenwandrahmen anliegt. Dann erfolgt ein Formschluss bzw. ein Verklemmen durch die Formspannung und Federspannung der Blattfeder 70. Durch die Geometrie und Auslegung dieser Blattfeder 70, welche an die Seitenwandrahmentoleranz angepasst ist, kann eine gleichbleibende Spannkraft sichergestellt werden. Aufgrund der Hebel- und Blattfedergeometrie sowie der Position der Führungsbahnen 50, 55 werden Kräfte und Bewegung der Befestigungskralle 30 so angepasst, dass eine einfache Einhandbedienung sichergestellt werden kann. Ein zusätzliches Verriegelungswerkzeug wird somit überflüssig. Dabei befindet sich die Hebelmechanik im geschlossenen Zustand nach Fig. 4 in einer Übertotposition, so dass kein weiteres Sicherungselement benötigt wird.

### BEZUGSZEICHENLISTE

- 1: Dachgrundträger
- 2: Fahrzeugdach
- 3: Fahrzeugkarosserie
- 5: Dachträgerelement
- 7: Tragstruktur
- 10: Seitenwandholm
- 15: erstes U-Profilelement
- 16: Schenkel
- 17: Stützfuß
- 18: erstes Verbindungselement
- 20: Fußelement
- 25: zweites U-Profilelement
- 26: Schenkel
- 27: zweites Verbindungselement
- 30: Befestigungskralle
- 31: erstes Ende
- 32: Abwinkelung
- 33: zweites Ende
- 34: Lagerlaschen
- 35: erster Lagerabschnitt
- 36: zweiter Lagerabschnitt
- 37: Zapfen
- 38: Öffnung
- 40: Welle
- 41: Wellenenden
- 50: erste Führung
- 51: erster Längsschlitz
- 55: zweite Führung
- 56: zweiter Längsschlitz
- 60: Spannhebel
- 61: erste Spannhebellagerlasche
- 62: erstes Ende
- 63: zweites Ende
- 64: zweite Spannhebellagerlasche
- 65: Spannhebelwelle
- 66: Federwelle
- 70: Blattfeder
- 71: erstes Blattfederende
- 72: zweites Blattfederende
- x: Fahrzeuglängsrichtung
- y: Fahrzeugquerrichtung
- z: Fahrzeughochrichtung

## Patentansprüche

1. Dachgrundträger für ein Kraftfahrzeug, aufweisend eine Tragstruktur (7) für ein Dachträgerelement (5) mit einer Befestigungskralle (30), welche an einem ersten Ende (31) an einen Seitenwandholm (10) einer Fahrzeugkarosserie (3) angreift und mit einem Spannhebel (60) gelenkig verbunden ist, wobei die Befestigungskralle (30) im Bereich ihres zweiten Endes (33) in einer Führung (50) in der Tragstruktur (7) geführt ist und eine Blattfeder (70) vorgesehen ist, welche einerseits an dem Spannhebel (60) im Bereich seines freien Endes (62) angreift und sich andererseits an der Tragstruktur (7) abstützt, wobei es beim Herunterdrücken des Spannhebels (60) zur Befestigungskralle (30) hin durch die Federkraft zu einem Verklemmen der Befestigungskralle (30) an dem Seitenwandholm (10) kommt, **dadurch gekennzeichnet, dass** die Tragstruktur (7) ein erstes U-förmiges Profilelement (15), welches zwei gegenüberliegende Schenkel (16) mit je einem Stützfuß (17) und ein die Schenkel (16) verbindendes parallel zum Fahrzeugdach (2) verlaufendes erstes Verbindungselement (18) aufweist, und ein innerhalb des ersten Profilelements (15) angeordnetes zweites U-förmiges Profilelement (25) umfasst, welches zwei gegenüberliegende Schenkel (26) und ein die beiden Schenkel (26) verbindendes, parallel zum Fahrzeugdach (2) verlaufendes zweites Verbindungselement (27) aufweist, wobei die zwei Profilelemente (15, 25) an den aufeinanderliegenden Verbindungselementen (18, 27) miteinander verbunden sind, und wobei die Führung (50) in den gegenüberliegenden Schenkeln (26) des zweiten Profilelements (25) ausgebildet ist.

2. Dachgrundträger nach Anspruch 1, **dadurch gekennzeichnet, dass** zur gelenkigen Verbindung von Befestigungskralle (30) und Spannhebel (60) Lagerlaschen (61) am Spannhebel (60) und Lagerlaschen (34) an der Befestigungskralle (30) vorgesehen sind, welche eine Welle (40) aufnehmen, welche an der Tragstruktur (7) in der Führung (50) verschiebbar aufgenommen ist.

3. Dachgrundträger nach Anspruch 1 oder 2, **dadurch gekennzeichnet, dass** die Befestigungskralle (30) an ihrem zweiten Ende (33) zusätzlich in einer zweiten Führung (55) in der Tragstruktur (7) geführt ist.

4. Dachgrundträger nach Anspruch 3, **dadurch gekennzeichnet, dass** die beiden Führungen (50, 55) in Form von Längsschlitzen (51, 56) in den gegenüberliegenden Schenkeln (26) des zweiten Profilelements (25) der Tragstruktur (7) ausgebildet sind.

5. Dachgrundträger nach Anspruch 4, **dadurch gekennzeichnet, dass** das zweite Ende (33) der Befestigungskralle (30) Zapfen (37) aufweist, welche in den Längsschlitzen (56) der zweiten Führung (55) aufgenommen sind.

6. Dachgrundträger nach einem der vorherigen Ansprüche 1 bis 5, **dadurch gekennzeichnet, dass** zur Anbindung der Blattfeder (70) an den Spannhebel (60) eine Spannhebelwelle (65) vorgesehen ist, welche in Lagerlaschen (64) am Spannhebel (60) aufgenommen ist.

7. Dachgrundträger nach einem der vorherigen Ansprüche 1 bis 6, **dadurch gekennzeichnet, dass** zur Anbindung der Blattfeder (70) an der Tragstruktur (7) eine Federwelle (66) zwischen den Schenkel (26) des zweiten Profilelements (25) der Tragstruktur (7) vorgesehen ist.

8. Dachgrundträger nach einem der vorherigen Ansprüche 1 bis 7, **dadurch gekennzeichnet, dass** die Befestigungskralle (30) eine Öffnung (38) zur Aufnahme der Welle (65) des Spannhebels (60) in seinem heruntergedrückten Zustand aufweist.

9. Dachgrundträger nach einem der vorherigen Ansprüche 1 bis 8, **dadurch gekennzeichnet, dass** die Tragstruktur (7) ein am Fahrzeugdach (2) anliegendes Fußelement (20) aufweist, auf welchem sich die Stützfüße (17) des ersten Profilelements (15) abstützen.

## Claims

1. Roof base support for a vehicle, comprising a support structure (7) for a roof support element (5) with a mounting claw (30) which engages on a first end (31) at a side wall strut (10) of a vehicle body (3) and is articulatedly connected to a tension level (60) wherein the mounting claw (30) is guided in the region of its second end (33) in a guide (50) in the support structure (7) and a leaf spring (70) is provided which on the one hand engages on the tension lever (60) in the region of its free end (62) and on the other hand is supported on the support structure (7) wherein when the tension lever (60) is pressed down to the mounting claw (30) by the spring force, the mounting claw (30) becomes stuck on the side wall strut (10) **characterised in that** the support structure (7) comprises a first U-shaped profile element (15), which has two opposing legs (16) each with a support foot (17) and a first connection element (18) connecting the legs (16) and running parallel to the vehicle roof (2), and a second U-shaped profile element (25) arranged inside the first profile element (15) which has two opposing legs (26) and a second connection element (27) connecting the two legs (26) and running parallel to the vehicle roof (2) wherein the two profile elements (15, 25) are connected to each other at the connection elements (18, 27) located on top of each other and wherein the guide (50) is formed in the opposing legs (26) of the second profile element (25).

2. Roof base support according to claim 1, **characterised in that** bearing tabs (61) are provided on the tension lever (60) and bearing tabs (34) are provided on the - mounting claw (30) for the articulated connection of mounting claw (30) and tension lever (60) which accommodate a shaft (40) which is accommodated on the support structure (7) so as to be movable in the guide (50).

3. Roof base support according to claim 1 or 2, **characterised in that** the mounting claw (30) is guided at its second end (33) additionally in a second guide (55) in the support structure (7).

4. Roof base support according to claim 3, **characterised in that** the two guides (50, 55) are formed in the form of longitudinal slits (51, 56) in the opposing legs (26) of the second profile element (25) of the support structure (7).

5. Roof base support according to claim 4, **characterised in that** the second end (33) of the mounting claw (30) comprises pins (37) which are accommodated in the longitudinal slits (56) of the second guide (55).

6. Roof base support according to any one of the preceding claims 1 to 5, **characterised in that** a tension lever shaft (65) is provided for connecting the leaf spring (70) on the tension lever (60) which is accommodated in bearing tabs (64) on the tension lever (60).

7. Roof base support according to any one of the preceding claims 1 to 6, **characterised in that** a spring shaft (66) is provided between the leg (26) of the second profile element (25) of the support structure (7) for connecting the leaf springs (70) on the support structure (7).

8. Roof base support according to any one of the preceding claims 1 to 7, **characterised in that** the mounting claw (30) comprises an opening (38) for accommodating the shaft (65) of the tension lever (60) in its pressed-down state.

9. Roof base support according to any one of the preceding claims 1 to 8, **characterised in that** the support structure (7) comprises a foot element (20) resting on the vehicle roof (2) on which the support feet (17) of the first profile element (15) are supported.

## Revendications

1. Système de barres transversales de toit pour un véhicule automobile, comportant une structure porteuse (7) pour une barre de toit (5) avec une griffe de fixation (30), qui vient en prise au niveau d'une première extrémité (31) avec un longeron de panneau latéral (10) d'une carrosserie de véhicule (3) et qui est reliée de manière articulée à un levier de serrage (60), la griffe de fixation (30) étant guidée dans la zone de sa deuxième extrémité (33) dans un guide (50) dans la structure porteuse (7) et un ressort à lame (70) étant prévu, lequel est en prise d'une part avec le levier de serrage (60) dans la zone de son extrémité libre (62) et s'appuie d'autre part à la structure porteuse (7), la griffe de fixation (30) venant ainsi pincer le longeron de panneau latéral (10) lorsque le levier de serrage (60) est poussé vers le bas en direction de la griffe de fixation (30) par une force de ressort, **caractérisé en ce que** la structure porteuse (7) comprend un premier élément profilé en forme de U (15), qui comporte deux branches opposées (16) avec chacune un pied d'appui (17) et un premier élément de liaison (18) reliant les branches (16) et s'étendant parallèlement au toit de véhicule (2), et un deuxième élément profilé en forme de U (25), qui est agencé à l'intérieur du premier élément profilé (15) et qui comporte deux branches opposées (26) et un deuxième élément de liaison (27) reliant les deux branches (26) et s'étendant parallèlement au toit de véhicule (2), les deux éléments profilés (15, 25) étant reliés entre eux au niveau des éléments de liaison (18, 27) superposés et le guide (50) étant réalisé dans les branches opposées (26) du deuxième élément profilé (25).

2. Système de barres transversales de toit selon la revendication 1, **caractérisé en ce que**, en vue de la liaison articulée de la griffe de fixation (30) et du levier de serrage (60), il est prévu des languettes de support (61) au niveau du levier de serrage (60) et des languettes de support (34) au niveau de la griffe de fixation (30), lesquelles languettes logent un arbre (40) qui est logé au niveau de la structure porteuse (7) de manière à pouvoir coulisser dans le guide (50).

3. Système de barres transversales de toit selon la revendication 1 ou 2, **caractérisé en ce que** la griffe de fixation (30) est guidée en plus, au niveau de sa deuxième extrémité (33), dans un deuxième guide (55) dans la structure porteuse (7).

4. Système de barres transversales de toit selon la revendication 3, **caractérisé en ce que** les deux guides (50, 55) sont réalisés sous forme de fentes longitudinales (51, 56) dans les branches opposées (26) du deuxième élément profilé (25) de la structure porteuse (7).

5. Système de barres transversales de toit selon la revendication 4, **caractérisé en ce que** la deuxième extrémité (33) de la griffe de fixation (30) comporte des tenons (37), qui sont logés dans les fentes longitudinales (56) du deuxième guide (55).

6. Système de barres transversales de toit selon l'une des revendications précédentes 1 à 5, **caractérisé en ce que**, pour lier le ressort à lame (70) au levier de serrage (60), il est prévu un arbre de levier de serrage (65) qui est logé dans des languettes de support (64) au niveau du levier de serrage (60).

7. Système de barres transversales de toit selon l'une des revendications précédentes 1 à 6, **caractérisé en ce que**, pour lier le ressort à lame (70) à la structure porteuse (7), il est prévu un arbre à ressort (66) entre les branches (26) du deuxième élément profilé (25) de la structure porteuse (7).

8. Système de barres transversales de toit selon l'une des revendications précédentes 1 à 7, **caractérisé en ce que** la griffe de fixation (30) comporte une ouverture (38) afin de loger l'arbre (65) du levier de serrage (60) lorsqu'il est poussé vers le bas.

9. Système de barres transversales de toit selon l'une des revendications précédentes 1 à 8, **caractérisé en ce que** la structure porteuse (7) comporte un élément de base (20) qui est adjacent au toit de véhicule (2) et sur lequel les pieds d'appui (17) du premier élément profilé (15) s'appuient.
